# EUROPEAN PATENT SPECIFICATION

(11) **EP 1 936 849 B1**
(45) Date of publication and mention of the grant of the patent: **23.06.2010**
(21) Application number: 06292055.8
(22) Date of filing: 22.12.2006
(51) Int. Cl.: H04J 3/16, H04Q 11/04

(54) **Method for mapping and demapping data information over the members of a concatenated group**
Verfahren zum Mapping und Demapping von Dateninformationen über die Mitglieder einer verketteten Gruppe
Procédé de mappage et démappage d'informations de données sur les membres d'un groupe concaténé

(43) Date of publication of application: 25.06.2008
(73) Proprietor: Alcatel Lucent, 75008 Paris (FR)
(72) Inventor: Magna detto Calceterra, Marcello, 20047 Brugherio (Milano) (IT); Razzetti, Luca Gabriele, 20099 Sesto S. Giovaani (Milano) (IT); Manenti, Roberto, 20098 S. Giuliano Milanese (Milano) (IT)
(74) Representative: Schmidt, Werner Karl

(56) References cited:
- EP-A- 0 994 591
- US-A1- 2006 126 641

## Description

### Field of the Invention

The present invention relates to a method for mapping and demapping data information over the members of a concatenated group.

### Background of the Invention

Three synchronous transmission systems are known, widespread and standardised nowadays: SDH, SONET and OTN.

These systems provide to transfer information through virtual containers; in the case of SDH, for example, higher order virtual containers are called VC-4 (150.336 Mbit/s) and VC-3 (48.960 Mbit/s) and lower order are called VC-2 (6.912 Mbit/s) and VC-11 (2.304 Mbit/s) and VC-12 (1.728 Mbit/s).

In these systems, a hierarchy of frame structures is defined to carry virtual containers; in the case of SDH, for example, there are defined STM-1 (155.52 Mbit/s), STM-4 (622.08 Mbit/s), STM-16 (2488.32 Mbit/s), STM-64 (9953.28 Mbit/s), STM-256 (39812.12 Mbit/s).

Traditional SDH/SONET (SDH=Synchronous Digital Hierarchy, SONET= Synchronous Optical NETwork) networks use a pre-defined hierarchy of synchronous payloads, as defined in ITU-T G.707 (12/2003). Originally, this hierarchical structure enabled easy aggregation of lower rate streams carrying voice traffic. For the transport of payloads that exceed the payload capacity of the standard set of Virtual Containers (VC-3/VC-4/VC-2/VC-12/VC-11 for SDH), VC concatenation was defined. Two types of concatenations were defined: contiguous and virtual concatenation. Contiguous concatenation has been part of SDH/SONET from its early days. It was conceived to accommodate high-speed data applications that use protocols such as ATM, Packet-over-SONET (PoS) and others that require high-bandwidth mappings over SDH/SONET. To enable this, multiple VCs are transported (and switched) across the SDH/SONET network as a single connection with the first SDH/SONET container payload pointer set in normal mode, and the subsequent payload pointers set to concatenation mode, thus linking all the units together. One POH (Path Overhead) is used for the whole VC4-Xc and it is located in the first column of the VC4-Xc, while columns 2 to X are fixed stuff. The concatenation functionality is required at each network element and not only at the end points of the path termination. For the SDH hierarchy, contiguous concatenation of X VC4 (with X=4, 16, 64, 256) is defined at high-order for high-speed data services and of X VC2 (with X=1...7) at low-order for low-speed services. For high-order the contiguously concatenated VC4-Xc and corresponding payload rates are:
- VC4-4c: 599.040 Mbps
- VC4-16c: 2.396.160 Mbps
- VC4-64c: 9.584.640 Mbps
- VC4-256c: 38.338.560 Mbps

For low-order the VC2-Xc, with value of X between 1 and 7, provides payload rates between 6.784 Kbps and 47.488 Kbps in steps of 6.784 Kbps.

Although contiguous concatenation has been successfully introduced and deployed for years, it posed some major deficiencies:
- contiguous concatenation doesn't address one of the main limitations of traditional SDH/SONET networks, that is the coupling between path establishment and physical resource reservation. In other words, with traditional SDH/SONET networks, even when physically available SDH/SONET paths exist, they may not be usable because of the non-contiguous concatenation nature of the available containers;
- some of the legacy SDH/SONET equipments may not support contiguous concatenation transport switching at higher rates such as VC4-64c and VC4-256c in some regions;
- some applications may require finer granularity of payloads than contiguous concatenation can offer.

To address these limitations, Virtual Concatenation has been defined for SDH and SONET in ITU-T G.707 (12/2003) and for OTN in ITU-T G.709 (03/2003). Virtual Concatenation defines a procedure whereby the contiguous bandwidth is divided into equal parts at the transmitting side and logically represents them in a Virtual Concatenated Group (VCG). A VCG is so composed of members: in SDH the members are the VCs (Virtual Containers), wherein each VC has its own POH, in Sonet the members are the Virtual Tributaries and in OTN the members are the Optical channels Data Units. The members of a VCG are transported as individual members across the SDH network over different routes and recombined at the far end destination VCG receiver. More than one VCG can be defined from a transmitting to a receiving side and each VCG can comprise a different number of members. For the SDH hierarchy, virtual concatenation of X VC3/4s (X=1...256) is defined for high-order and of X VC11/12/2 (X=1..64) for low-order. Because of different propagation delay associated with individual member in the VCG, a sequencing scheme has been developed to help identify the differential delay and the associated realignment process. Intermediate network elements do not perform path termination for these connections, and therefore, do not need to be virtual concatenation aware. High-order VCs (55 Mbps and 155 Mbps) are grouped when transporting high-speed data services such as Gigabit Ethernet and Fiber Channel; low-order VCs (1,5 Mbps, 2 Mbps and 6,3 Mbps) are used for low-speed data services such as 10 Mbps and 100 Mbps Ethernet.

The Link Capacity Adjustment Scheme (LCAS), as defined in ITU-T G.7042/Y.1305 (08/2003), is a complementary protocol to Virtual Concatenation and can be used both for SDH/SONET and OTN networks. It works unidirectionally, enabling carriers to provide asymmetric bandwitdth, that is the bandwidth of a forward direction can be different from the bandwidth of the return direction. LCAS allows "hitless" adjustment of the size of a virtual concatenated group of members. LCAS takes care of the synchronization between the sender and receiver so that the size of a virtual concatenated group can be increased or decreased in response to a change in service bandwidth requirement in a manner that does not corrupt or interfere with the data signal. Moreover the size can be temporarily decreased in response to a fault condition in an existing member: since the members of a VCG don't need to use the same physical links of the network (path diversity), some of its members could experience a failed link along their path while the remaining members do not. Only the affected members of the VCG are removed: the user's bandwidth is temporarily reduced, so the service is up and running at a degraded level, but it is not interrupted. The removed member is added in a hitless way when the failure has been removed. LCAS operates at the end points of the connection only and so to deploy LCAS only new tributary cards are required, without requiring hardware upgrades to network elements throughout the entire network.

All the above is known.

When using concatenation, either continuous or virtual concatenation, a data flow, e.g. an Ethernet or a Gigabit Ethernet, is distributed among a plurality of virtual containers; therefore, at transmission side the data packets of the data flow are mapped over the frames of the synchronous transmission system and at the reception or termination side the frames must be demapped in order to reconstruct the data flow.

According to the prior art, this is carried out through a mapper/demapper circuit comprising a plurality of large data buffers, one for each port receiving/transmitting a data flow; these buffers are written and read according to an appropriate access scheme which is determined "runtime" by a processor internal to the mapper/demapper circuit. In order to support any possible configuration of the network element comprising such circuit, the size of each buffer was proportional to the maximum number of virtual containers in a virtual concatenated group; therefore, a lot of storage capacity was wasted due to the fact that in practice most concatenated groups includes a limited number of virtual containers.

The Applicant has noticed that if a high number of ports (for example 64 or 128 ports) is used and if small buffers are used, a very complex addressing scheme is required and a high processing capacity is required for keeping up with the data flows (that may be high rate).

The situation is worse, from the addresses processing point of view, at configuration or reconfiguration operations.

The situation is further worse, from the addresses processing point of view, if virtual concatenation together with the LCAS protocol is implemented in the synchronous transmission system; in fact, in this case, it is necessary to adjust the capacity of a group (that is, to add or remove virtual containers to or from the virtual concatenated group) in a hitless way.

US 20061126641 A1 describes an interface system capable of transmitting packet data or non-continuous data through a network that is adapted to transmit continuous data. The interface system uses a Virtual Concatenation Group (VCG) signal to match the transmitting signal's bandwidth and effectively map it on to SONET/SDH frame. The interface system applies VCG mapping related to low order virtual container signals, VC-11, VC-12 and higher order virtual container signals, VC-3 and VC-4. Likewise, the interface system may allow packet data to be transmitted through SDH configured network. The interface system may also use two or more memories to present read/write collision that may occur when the input and output addresses are the same.

EP 0 994 591 A describes a protection method for providing integrity of transport of a data packet stream over a plurality of synchronous digital channels each comprising a virtual container stream, the virtual container streams being virtually concatenated together, Data packets from a data stream are mapped to a plurality of memory areas, from which the data packets are transferred to payloads of a plurality of virtual container streams which are carried over a asynchronous digital network by a plurality of different routes, being either path connections or rings. Upon failure of a path or section, a received entity signals to a transmitting synchronous digital entity via conventional path or section termination signaling functions to alert the transmitting entity of a failure in a path or section. Upon receiving a path failure signal, the transmitting entity gracefully degrades to offer a reduced bandwidth.

### Summary of the Invention

The main object of the present invention is to overcome the disadvantages of the prior art and to provide a method for mapping data information from an input port to multiple members of a concatenated group and a method for demapping the data information received from the multiple members of the concatenated group to an output port, such that the methods can be implemented through a relatively small amount of memory and with a relatively small processing capacity.

This object is particularly felt for virtual concatenation with LCAS protocol, in SDH or SONET or OTN networks.

The above object is achieved through the method having the features set out in the attached independent claim 1 and in independent claim 14, through a network element according to claim 15, through a computer program according to claim 17 and a computer readable medium according to claim 18; further advantageous features are set out in the dependent claims.

According to a first aspect, the present invention provides a method for mapping data information from an input port to multiple members of a concatenated group according to claim 1.

In this way, addressing of the data memory during the mapping or demapping becomes not only easier but also quicker so that the data memory can be small; additionally, the calculation of the read address sequence may be carried out slowly so that a relatively small processing capacity may be sufficient.

In this way, additionally, any variation in the number and/or capacity of any or of all members of the concatenated group can be easily and quickly processed including those caused by the adjustment of the size of a concatenated group according to the LCAS protocol.

In this way, one data buffer can be used for reading data and the other data buffer can be used for writing data (two data buffers is the minimum required number), so that read and write on the data memory can be carried out at the same time with a simple hardware solution and so that data from the memory can be accessed easier and quicker.

Further, in this way, the configuration (or reconfiguration) is quick and reliable and the calculation of the read address sequence bears no time constraint.

Preferably, the method further includes mapping of data information from another input port to at least one member of another concatenated group, wherein the configuration information further indicates assignment of the other input port to the other concatenated group and wherein the calculation further takes into account the number of the at least one member of the other concatenated group. The method includes the steps of further receiving data information from the other input port, and of reading from the data memory information of the multiple members of the concatenated group and of the at least one member of the other concatenated group according to the read address sequence stored into the address memory.

Preferably, the write address sequence is an arithmetic progression.

Preferably, the information of the multiple members is read according to an increasing order of the multiple members.

Preferably, the method further includes the store into the address memory of the calculated write address sequence.

Preferably, the method further includes the store into the address memory of identifiers of the input ports.

Preferably, the read is performed at a time controlled by the Link Capacity Adjustment Scheme.

Preferably, the received data information is arranged into packets.

Preferably, the members are arranged into frames of a synchronous telecommunications network.

Preferably, the concatenation of the members is contiguous or virtual.

Preferably, the packet is Ethernet or Gigabit Ethernet.

Preferably, the telecommunications network is Synchronous Digital Hierarchy or Synchronous Optical Network or Optical Transport Network.

Preferably, the mapping is performed according to the Generic Framing Procedure.

According to a second aspect, the present invention provides a method for demapping data information received from multiple members of a concatenated group to an output port according to claim 14.

According to a third aspect, the present invention provides a network element to map data information to multiple members of a concatenated group according to claim 15.

According to a fourth aspect, the present invention provides a computer program to map data information from an input port to multiple members of a concatenated group when the computer program is run on hardware of a network element. The computer program comprises code means adapted to perform the method for mapping as set forth above.

According to a fifth aspect, the present invention provides a computer readable medium having a computer program recorded thereon, wherein the computer program is according to the fifth aspect of the present invention.

### Brief Description of the Drawings

The present invention will become more apparent from the following description to be considered in conjunction with the annexed drawings.
Fig. 1 shows a simplified telecommunication environment where the present invention can be applied.
Fig. 2 schematically shows a short time section of an Ethernet data flow.
Fig. 3 schematically and partially shows the information content of four different virtual containers that are virtual concatenated.
Fig. 4 shows a schematic block diagram of an architecture implementing a mapping method according to the present invention.
Fig. 5 schematically shows one of the data buffers of Fig. 4.

It is to be understood that the following description and the annexed drawings are not to be interpreted as limitations of the present invention but simply as exemplifications.

### Best mode for carrying out the invention

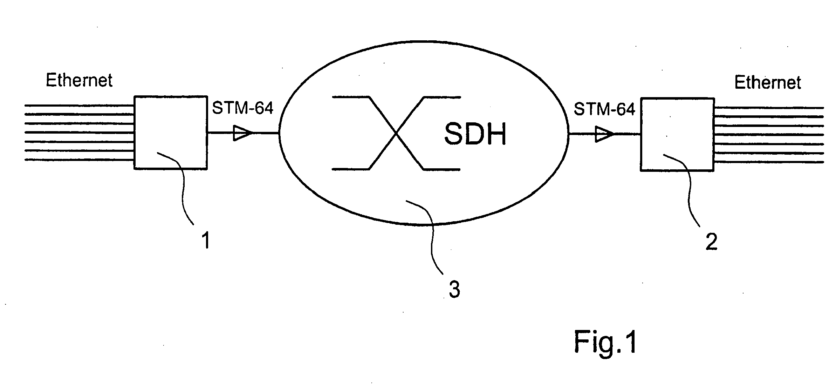

Fig. 1 schematically shows a first network element 1 and a second network element 2, both connected to a telecommunication network 3 for synchronous transmission of data information, in particular an SDH network.

For the purpose of the present description, it is considered that network element 1 transmits over network 3 a STM-64 data flow (about 10 Gbit/s = about 1.25 Gbyte/s) carrying sixty-four virtual containers VC-4 (about 150 Mbit/s = about 19 Mbyte/s) and that network element 2 receives from network 3 the STM-64 data flow carrying the sixty-four virtual containers VC-4 transmitted by network element 1.

Network element 1 and network element 2 are provided with a plurality of Ethernet or Gigabit Ethernet data flows associated to a corresponding plurality of input and output ports, respectively; the Ethernet or Gigabit Ethernet data flows received from network element 1 have to be transferred to network element 2 through the SDH network 3; therefore, for this communication, network element 1 can be considered the transmission side and network element 2 can be considered the reception side and termination side.

In order to transport an Ethernet or a Gigabit Ethernet data flow over an SDH network, an intermediate adaptation layer is used between the Ethernet level and the SDH level; in the embodiment of the present invention, GFP [Generic Framing Procedure, defined in ITU-T G.7041/Y.1303, Aug.,2005] is used for mapping the Ethernet or Gigabit Ethernet data flows over the SDH transport network, by encapsulating Ethernet or Gigabit Ethernet packets into GFP frames. Alternatevely, other adaptation layer can be used, like POS, PPP, HDLC.

Preferably, the concatenated group is carried by frames of a synchronous transmission network, like SDH, SONET or OTN. The concatenation can be contiguous or virtual.

Network element 1 receives data packets of the Ethernet or Gigabit Ethernet data flows from its input ports, encapsulates the Ethernet or Gigabit Ethernet data packets into GFP frames, stores into a data memory bytes of the Ethernet or Gigabit Ethernet data packets and bytes of the GFP overhead, reads from the data memory the stored bytes, inserts the read bytes into the STM-64 frames (in particular into the VC-4) and transmits STM-64 frames carrying one or more VCG (comprising VC-4) and one or usually more individual VC-4 containers (i.e. a VCG comprising only one VC-4); in this way, the Ethernet or Gigabit Ethernet data packets are mapped over the VC-4 of the STM-64 frames.

The virtual containers VC-4 are transmitted by network element 1, are transported as individual virtual containers across network 3 over different routes, and are recombined by network element 2.

Network element 2 receives the STM-64 frames carrying one or more VCG (comprising VC-4) and one or usually more individual VC-4 (i.e. a VCG comprising only one VC-4). It extracts the Ethernet or Gigabit Ethernet data packets from the received STM-64 frames, in particular from their payloads, stores into a data memory bytes of the received VC-4, reads from the data memory the stored bytes and transmits the read bytes to its output ports (after removing the GFP mapping overheads); in this way, the Ethernet or Gigabit Ethernet data packets are demapped from the VC-4 of the received STM-64 frames.

According to a first embodiment of the invention, one of the Ethernet data flows received from an input port has a maximum data rate of about 600 Mbit/s; therefore, four virtual containers VC-4 within a STM-64 frame are sufficient for carrying this data rate (including the GFP mapping overhead).

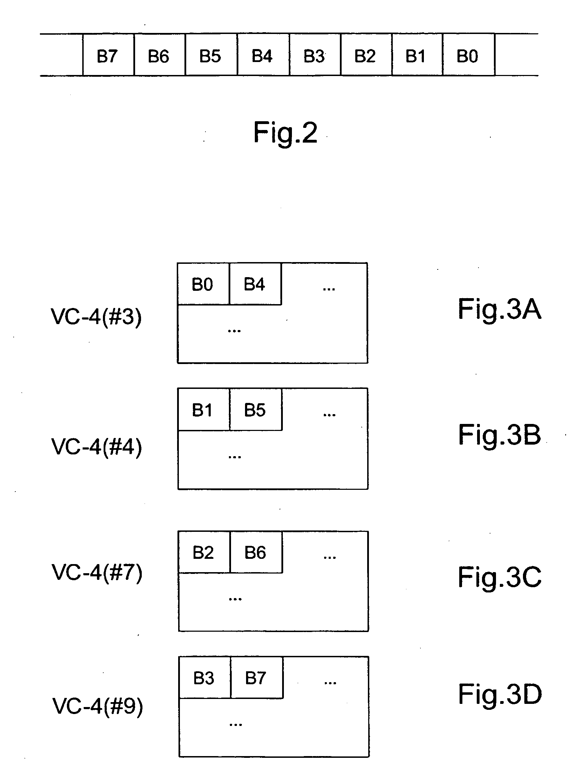

Fig. 2 shows a short sequence of eight consecutive bytes (indicated with B0 B1 B2 B3 B4 B5 B6 B7) of this Ethernet data flow received by network element 1; B0 is the first byte of this short sequence and B7 is the last byte of this short sequence.

Referring to Fig. 3A-3D, the bytes received from this Ethernet data flow are cyclically mapped over four virtual containers of this STM-64 data flow in an order at the transmission side, for example VC-4 number 3 (indicated with VC-4(#3)), VC-4 number 4 (indicated with VC-4(#4)), VC-4 number 7 (indicated with VC-4(#7)), VC-4 number 9 (indicated with VC-4(#9)). In the following, it is assumed that these virtual containers constitute Virtual Concatenated Group number 1 (indicated with VCG(#1)).

Specifically, the first bytes of the payload of VC-4(#3) are B0 and then B4 (like shown in Fig. 3A), the first bytes of the payload of VC-4(#4) are B1 and then B5 (like shown in Fig. 3B), the first bytes of the payload of VC-4(#7) are B2 and then B6 (like shown in Fig. 3C), the first bytes of the payload of VC-4(#9) are B3 and then B7 (like shown in Fig. 3D). In this example, for the sake of simplicity and clarity, we have neglected the bytes added by the GFP layer.

According to a second embodiment of the invention, preferably another of these Ethernet or Gigabit Ethernet data flows (received from another input port) is mapped over another virtual concatenated group; the maximum data rate of this other Ethernet data flow may be different from the above example (either higher or lower) and thus the other virtual concatenated group can require a different numbers (either higher or lower) of virtual containers VC-4. Preferably, only one virtual container VC-4 is sufficient, like for example an Ethernet data flow at 100Mbit/ s, and thus no concatenation is necessary; for the purpose of the present invention, this single virtual container is equivalent to a virtual concatenated group having only one virtual container VC-4.

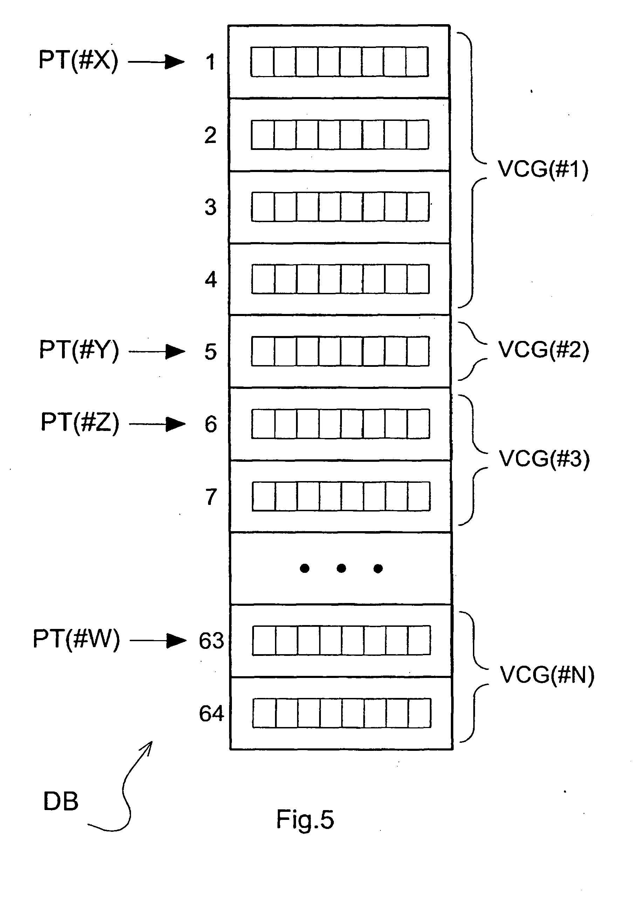

Referring to Fig. 5, preferably in a third embodiment a plurality of input ports (indicated with PT(#X), PT(#Y), PT(#Z) and PT(#W)) receives a plurality of corresponding Ethernet or Gigabit Ethernet data flows. Specifically, a first data flow received from port number X (indicated with PT(#X)) is mapped over VCG(#1) including four VC-4, a second data flow received from port number Y (indicated with PT(#Y)) is mapped over one VC-4 (or we can say that PT(#Y) is mapped over VCG(#2) having one VC-4), a third data flow received from port number Z (indicated with PT(#Z)) is mapped over VCG(#3) having two VC-4, and a fourth data flow received from port number W (indicated with PT(#W)) is mapped over VCG(#N) having two VC-4. As it is clear from this figure, the number of VC-4 is sixty-four as they will be transported by a STM-64.

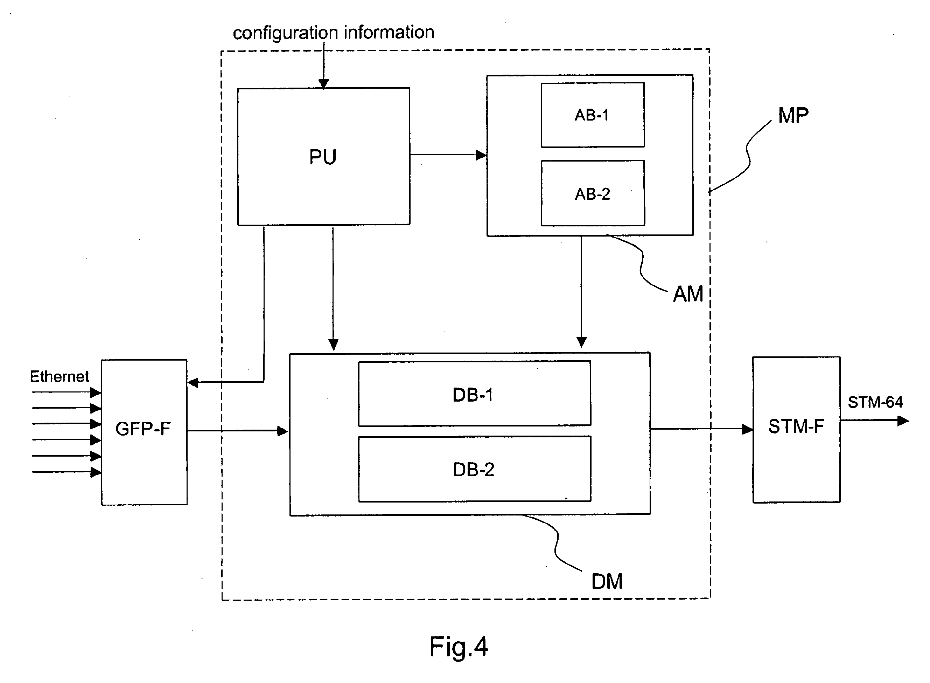

Fig. 4 schematically shows a block diagram of an architecture implementing a mapping method according to the present invention; network element 1 (shown in Fig. 1) includes this block diagram.

A plurality of input ports receives a corresponding plurality of Ethernet or Gigabit Ethernet data flows; the input ports are connected to a GFP framer (indicated with GFP-F), which is a circuit adapted to receive the plurality of Ethernet or Gigabit Ethernet data flows from the corresponding plurality of input ports, to map these plurality of Ethernet or Gigabit Ethernet data flows into GFP frames and to generate an output carrying these GFP frames.

The output of the GFP framer GFP-F is connected to a data memory DM. Therefore the GFP frames are received by the data memory DM, wherein they are stored. The store into data memory DM is controlled by a processing unit (indicated with PU), which calculates a sequence of write addresses, which are used for the store (arrow from processing unit PU to data memory DM).

The read operation from data memory DM is controlled by the processing unit PU and is carried out using a sequence of read addresses stored into an address memory (indicated with AM); preferably, the processing unit PU stores into the address memory AM also the calculated write address sequence and the store of the GFP frames into the data memory DM is carried out using the write address sequence stored into the address memory.

Specifically, the processing unit PU receives a configuration information indicating a rule for assigning the input ports to the multiple members of the virtual concatenated groups. Afterwards, PU calculates the write address sequence, calculates the read address sequence and stores the read address sequence into the address memory AM; the store of the read address sequence into the address memory AM is indicated in Fig. 4 by an arrow from the processing unit PU to the address memory AM.

Processing unit PU also sends to address memory AM a command (not shown in Fig. 4) indicating a read operation from address memory AM; afterwards, the address memory AM sends the stored read address sequence to data memory DM (arrow from address memory AM to data memory DM).

Preferably, processing unit PU also stores the calculated write address sequence into the address memory AM (arrow from the processing unit PU to the address memory AM) and sends to address memory AM another command (not shown in Fig. 4) indicating a write operation into address memory AM; afterwards, the address memory AM sends the stored write address sequence to data memory DM (arrow from address memory AM to data memory DM).

The bytes read from data memory DM are sent to an STM framer indicated with STM-F (arrow from data memory DM to STM framer STM-F), which is a circuit adapted to generate STM frames (in particular STM-64 frames) carrying the bytes read from the data memory DM.

In this example, the number of bytes transferred at a time from framer GFP-F to data memory DM is eight and all the eight bytes belong to the same Ethernet or Gigabit Ethernet data flow or, in other words, are received from the same input port.

In this example, the number of bytes transferred at a time from the data memory DM to the framer STM-F is eight; each of the eight byte belong to a different VC-4 container of the STM-64 frame.

This means that data packets are written into memory DM at the same rate as data packets are read from memory DM.

The data packet size is not strictly related to the length of the words stored into the data memory.

In case of a plurality of input ports, processing unit PU further sends a request to framer GFP-F (arrow from processing unit PU to framer GFP-F); this request indicates a port address, that is the processing unit PU requests to framer GFP-F bytes from a specific port.

As described above, data is transferred from framer GFP-F to framer STM-F through a mapper (indicated with MP in Fig. 4), including the processing unit PU, the data memory DM and the address memory AM.

Preferably, the data memory includes two data buffers, indicated in Fig. 4 with DB-1 and DB2; advantageously, the two buffers are identical. While buffer DB-1 is written, buffer DB-2 is read, and while buffer DB-2 is written, buffer DB-1 is read. Therefore, when buffer DB-2 is written, buffer DB-1 is ready to be written again. The read and write operations of data memory DM are independent and can be carried out easily in parallel.

Preferably, the address memory AM includes two address buffers, indicated in Fig. 4 with AB-1 and AB-2; advantageously, the two address buffers are identical.

When performing a first configuration (or a subsequent reconfiguration) of the virtual concatenated group (or groups) transmitted by network element 1, the processing unit PU calculates the read address sequence and the write address sequence and stores the read address sequence (and preferably, also the write address sequence) into one of the two address buffers (AB-1 or AB-2) which is not currently used by the processing unit PU. Afterwards, processing unit PU starts using this address buffer with the recently calculated read address sequence, while the other address buffer is ready to receive the addresses of a new configuration of the virtual concatenated group (or groups) transmitted by network element 1.

An architecture dual with respect to the one of Fig. 4 is used for implementing a demapping method according to the present invention; network element 2 of Fig. 1 includes the circuit to perform the demapping method.

A key aspect of the present invention is the storage of data, in particular the location of data in the data memory; in fact, an efficient and effective access to the data memory allows quick processing of the data packets and a reduced size requirement of the data memory.

Fig. 5 schematically shows a data buffer DB, which is the data buffer DB-1 or DB-2 of Fig. 4; it is worth noting that this is only one possibility of realizing a buffer according to the present invention.

The data buffer DB stores a number of words equal to the maximum number of Virtual Containers and has no relation with the number of ports and/or the rate of the data flows received from the input ports.

Specifically, the data buffer DB is represented as an array of sixty-four rows (numbered from 1 to 64) corresponding to sixty-four words (numbered from 1 to 64); each word consists of eight bytes (64 bits) and thus this buffer stores 512 bytes.

The number of words of this array corresponds to the number of VC-4 in a STM-64 frame.

In this case, the number of bytes per word is related to the size of the Ethernet or Gigabit Ethernet data packets transferred from framer GFP-F to data memory DM.

Fig. 5 refers to a specific configuration of network element 1 at a certain time. According to this configuration, a first data flow received from port number X is mapped over VCG number 1 (indicated with VCG(#1)) having four VC-4, a second data flow received from port number Y is mapped over one VC-4 (or we could say VCG number 2, indicated with VCG(#2) having one VC-4), a third data flow received from port number Z is mapped over VCG number 3 (indicated with VCG(#3)) having two VC-4, and a fourth data flow received from port number W is mapped over VCG number N (indicated with VCG(#N)) having two VC-4.

Fig. 5 shows the storage areas relating to the various VCGs (see references on the right of the array). The storage area of VCG(#1) consists of four memory words from address 1 to 4 (see references on the left of the array), because VCG(#1) has four VC-4 members. The storage area of VCG(#2) consists of one memory word at address 5, because VCG(#2) has one VC-4 member. The storage area of VCG(#3) consists of two memory words at addresses 6 and 7, because VCG(#3) has two VC-4 members. The storage area of VCG(#N) consists of two memory words at addresses 63 and 64, because VCG(#N) has two VC-4 members.

As an STM-64 frame carries up to sixty-four VC-4, whatever the configuration or reconfiguration of network element 1, a small buffer of sixty-four memory words is sufficient for the mapping function.

Fig. 5 also shows the starting addresses PT#X, PT#Y, PT#Z, ... PT#W (see arrows on the left of the array) of the storage areas associated to the corresponding ports X, Y, Z, ... W receiving the Ethernet or Gigabit Ethernet data flows.

Referring to Fig. 5, when a data packet of eight bytes is received from framer GFP-F coming from one of the ports of network element 1 (i.e. from one of the Ethernet or Gigabit Ethernet data flows), its bytes are stored into one of the memory words of the buffers DB-1 or DB-2 of data memory DM.

By appropriately requesting data packets to the framer GFP-F (according to the configuration of network element 1), the currently used buffer (DB) is filled. To this respect, processing unit PU requests to framer GFP-F data packets from specified ports. For a correct filling of the data buffers, the processing unit PU has to poll (through framer GFP-F) the ports of network element 1 in an appropriate and repeated, preferably periodic, manner, i.e. according to a request sequence depending on the configuration of network element 1; the request sequence is associated to a write address sequence used for storing data into data buffer DB-1 or DB-2 of data memory DM. According to a first example, the following write address sequence is calculated by the processing unit PU:

| port address | write address sequence |
|---|---|
| X | 1 |
| X | 2 |
| X | 3 |
| X | 4 |
| Y | 5 |
| Z | 6 |
| Z | 7 |
| ... | ... |
| W | 63 |
| W | 64 |

Therefore, the write address sequence is an arithmetic progression: this has the advantage to fill the data buffer in an optimized way, without wasting memory capacity and thus requiring a small data memory.

Let's assume the following configuration of the VC-4 of the Virtual Concatenated Groups of the first example:
- VC-4(#1) is the first and only member of VCG(#2)
- VC-4(#2) is the first member of VCG(#3)
- VC-4(#3) is the first member of VCG(#1)
- VC-4(#4) is the second member of VCG(#1)
- VC-4(#5) is the second member of VCG(#3)
- VC-4(#6) is the first member of VCG(#N)
- VC-4(#7) is the third member of VCG(#1)
- VC-4(#8) is the second member of VCG(#N)
- VC-4(#9) is the fourth member of VCG(#1)

If the words to be mapped into the VC-4 are read according to the order of the VC-4 (that is, the first VC-4 which is read is VC-4(#1), the second is VC-4(#2), ... the last is VC-4(#64)), the processing unit will calculate the following read address sequence:
5, 6, 1, 2, 7, 63, 3, 64, 4, ....

Therefore the words are read from the data memory according to the above read address sequence: the first bytes read from the data buffer consists of one byte of the first nine VC-4 for the STM-64 frame.

According to the embodiment of Fig. 5, the complete sequence relates to 512 bytes to be read as sixty four data packets of eight bytes each.

At a configuration (or reconfiguration) of the virtual concatenated group (or groups) transmitted by network element 1, a read address sequence and a write address sequence are calculated by the processing unit PU and the read address sequence is stored into address memory AM; preferably, the write address sequence is also stored into the address memory AM.

Preferably, in case of a plurality of input ports, a port address sequence is calculated by the processing unit PU; advantageously, the port address sequence is also stored into the address memory AM.

In order to store these three sequences, each of the two address buffers AB-1 and AB-2 comprises a read address section, a write address section and a port address section (this is not shown in Fig. 4).

Switching between two address buffers (either from AB-1 to AB-2 or from AB-2 to AB-1) at a reconfiguration of the network element 1 of Fig. 4 (and in similar embodiments of the present invention) is carried out in a particular way that will be explained in the following.

Let us assume that network element 1 is operating and using a read address sequence and a write address sequence respectively stored into a read address section and into a write address section of address buffer AB-1; the port address sequence is neglected only for the sake of simplicity.

When a reconfiguration command and the corresponding reconfiguration information are received by network element 1, a new read address sequence and a new write address sequence are calculated by processing unit PU and they are stored into the read address section and the write address section of address buffer AB-2.

When the calculation is finished, the new write address sequence stored into the write address section of address buffer AB-2 is used for writing data into e.g. data buffer DB-1, while the old read address sequence stored into the read address section of address buffer AB-1 is used for reading data previously stored in e.g. data buffer DB-2 according to the old write address sequence.

In other words, at the switching between two address buffers, i.e. at a reconfiguration of the network element, both address buffers are used for reading data from and writing data into the data memory for a short time.

According to the above example, two sequences are calculated by processing unit PU. Anyway, in alternative embodiments, a lower number of sequences may be calculated; for example, the write address sequence may correspond simply to an address arithmetic progression (1, 2, 3, 4, ...).

According to the above example, the calculation of the write address sequence is more simple than the calculation of the read address sequence. Anyway, in alternative embodiments, the calculation of the read sequence can be more simple than the calculation of the write address sequence.

The method for mapping (or demapping) according to the invention can be advantageously implemented in a network element of a telecommunication network, like an SDH network, a Sonet network or an OTN network; referring to Fig. 1, the mapping method is performed in network element 1 and the demapping method is performed in network element 2, because Fig. 1 shows an Ethernet or Gigabit Ethernet data flow from network element 1 to network element 2. In case of a bidirectional Ethernet or Gigabit Ethernet data flow, that is an Ethernet or Gigabit Ethernet data flow also from network element 1 to network element 2, each network element (1 or 2) performs both the mapping and the demapping method.

The method is implemented in the network element on the Processor Unit (PU of Fig. 4), which is an hardware device, like an Application Specific Integrated Circuit (ASIC), a Field Programmable Gate Array (FPGA), an Electrically Programmable Logical Device (EPLD) or a microprocessor (external or embedded into an ASIC). The data memory DM and the address memory AM can be different devices or the same device and can be external or internal to the Processor Unit PU.

The method according to the invention can be advantageously implemented through a software program like VHDL (Very high speed integrated circuit Hardware Description Language), mapped into an ASIC, FPGA or EPLD.

Alternatevely, the method according to the invention can be advantageously implemented through a software program (like C), running on a microprocessor.

## Claims

1. Method for mapping data information (Ethernet) from an input port (PT(#X)) to multiple members of a concatenated group (VCG(#1)), the method including the steps of:
a) receiving configuration information indicating a rule for assigning the input port to the multiple members of the concatenated group;
b) calculating (PU) a write address sequence taking into account the number of the multiple members of the concatenated group and calculating a read address sequence taking into account the configuration information and the write address sequence;
c) storing the calculated read address sequence into an address memory (AM) comprising a first address buffer (AB-1) and a second address buffer (AB-2);
d) receiving the data information from the input port;
e) storing at least part of the received data information into a data memory (DM) according to the calculated write address sequence, said data memory (DM) comprising a first data buffer (DB1-) and a second data buffer (DB-2);
f) reading, from the data memory (DM), information of the multiple members of the concatenated group according to the calculated read address sequence stored into the address memory (AM),
said method being **characterized in that**:
i) said calculated read address sequence and said calculated write address sequence are stored in said first address buffer (AB-1); and
ii) when a reconfiguration command is received, a new write address sequence and a new read address sequence are calculated and stored into said second address buffer (AB-2), said calculated new write address sequence being used for storing into the first data buffer (DB-1) and said calculated read address sequence being used for reading from the second data buffer (DB-2).

2. Method according to claim 1, further including mapping of data information from another input port to at least one member of another concatenated group, wherein:
- the configuration information further indicates assignment of the other input port to the other concatenated group;
- the calculation further takes into account the number of the at least one member of the other concatenated group;
including the steps of:
- further receiving data information from the other input port; and
- reading from the data memory (DM) information of the multiple members of the concatenated group and of the at least one member of the other concatenated group according to the calculated read address sequence stored into the address memory (AM).

3. Method according to any of the previous claims, wherein the calculated write address sequence is an arithmetic progression.

4. Method according to any of the previous claims, wherein the information of the multiple members is read according to an increasing order of the multiple members.

5. Method according to any of the previous claims, wherein during a time period is performed the store into the first data buffer (DB-1) and is performed the read from the second data buffer (DB-2), and wherein during a subsequent time period is performed the read from the first data buffer (DB-1) and the store into the second data buffer (DB-2).

6. Method according to any of claims 2 to 5, further including the store into the address memory (AM) of identifiers of the input ports.

7. Method according to any of the previous claims, wherein the read is performed at a time controlled by the Link Capacity Adjustment Scheme.

8. Method according to any of the previous claims, wherein the received data information is arranged into packets.

9. Method according to any of the previous claims, wherein the members are arranged into frames of a synchronous telecommunications network.

10. Method according to any of the previous claims, wherein the concatenation of the members is contiguous or virtual.

11. Method according to any of claims 8 to 10, wherein the packet is Ethernet or Gigabit Ethernet.

12. Method according to any of claim 8 to 11, wherein the telecommunications network is Synchronous Digital Hierarchy or Synchronous Optical Network or Optical Transport Network.

13. Method according to claim 12, wherein the mapping is performed according to the Generic Framing Procedure.

14. Method for demapping data information received from multiple members of a concatenated group to an output port, the method including the steps of:
a) receiving configuration information indicating a rule for assigning the multiple members of the concatenated group to the output port;
b) calculating a write address sequence taking into account the number of the multiple members of the concatenated group and calculating a read address sequence taking into account the configuration information and the write address sequence;
c) storing the calculated read address sequence into an address memory (AM) comprising a first address buffer (AB-1) and a second address buffer (AB-2);
d) receiving the data information from the multiple members of the concatenated group;
e) storing at least part of the received data information into a data memory (DM) according to the calculated write address sequence, said data memory (DM) comprising a first data buffer (DB-1) and a second data buffer (DB-2);
f) reading from the data memory (DM) information of the output port according to the calculated read address sequence stored into the address memory (AM),
said method being **characterized in that:**
i) said calculated read address sequence and said calculated write address sequence are stored in said first address buffer (AB-1); and
ii) when a reconfiguration command is received, a new write address sequence and a new read address sequence are calculated and stored into said second address buffer (AB-2), said calculated new write address sequence being used for storing into the first data buffer (DB-1) and said calculated read address sequence being used for reading from the second data buffer (DB-2).

15. Network element (1) to map data information (Ethernet) to multiple members of a concatenated group (VCG(#1)), the network element (1) including:
- at least one input port (PT(#X)) adapted to receive the data information;
- a data memory (DM) adapted to store at least part of the received data information, said data memory (DM) comprising a first data buffer (DB-1) and a second data buffer (DB-2);
- an address memory (AM) comprising a first address buffer (AB-1) and a second address buffer (AB-2); and
- processing means (PU) adapted to:
a) receive configuration information indicating a rule for assigning the input port to the multiple members of the concatenated group;
b) calculate a write address sequence taking into account the number of the multiple members of the concatenated group;
c) calculate a read address sequence taking into account the configuration information and the write address sequence;
d) store the calculated read address sequence into the address memory (AM);
e) store into the data memory (DM) the at least part of the received data information according to the calculated write address sequence;
f) read, from the data memory (DM), information of the multiple members of the concatenated group according to the calculated read address sequence stored into the address memory (AM),
said network element being **characterized in that** it is such that:
i) said calculated read address sequence and said calculated write address sequence are stored in said first address buffer (AB-1); and
ii) when a reconfiguration command is received, a new write address sequence and a new read address sequence are calculated and stored into said second address buffer (AB-2), said calculated new write address sequence being used for storing into the first data buffer (DB-1) and said calculated read address sequence being used for reading from the second data buffer (DB-2).

16. Network element according to claim 15, wherein the processing means are further adapted to:
• perform during a time period the store into the first data buffer (DB-1) and the read from the second data buffer (DB-2);
• perform during a subsequent time period the read from the first data buffer (DB-1) and the store into the second data buffer (DB-2).

17. Computer program to map data information from an input port to multiple members of a concatenated group when the computer program is run on hardware of a network element, the computer program comprising code means adapted to perform the method according to any of claims 1 to 13.

18. A computer readable medium having a computer program recorded thereon, wherein the computer program is according to claim 17.

## Patentansprüche

1. Verfahren zum Mapping von Dateninformationen (Ethernet) von einem Eingangsport (PT(#X)) auf mehrere Mitglieder einer verketteten Gruppe (VCG(#1)), wobei das Verfahren die folgenden Schritte umfasst:
a) Empfangen von Konfigurationsinformationen, welche eine Regel für das Zuordnen des Eingangsports zu den mehreren Mitgliedern der verketteten Gruppe angeben;
b) Berechnen (PU) einer Folge von Schreibadressen unter Berücksichtigung der Anzahl der mehreren Mitglieder der verketteten Gruppe, und Berechnen einer Folge von Leseadressen unter Berücksichtigung der Konfigurationsinformationen und der Folge von Schreibadressen;
c) Speichern der berechneten Folge von Leseadressen in einem Adressspeicher (AM), welcher einen ersten Adresspuffer (AB-1) und einen zweiten Adresspuffer (AB-2) umfasst;
d) Empfangen der Dateninformationen vom Eingangsport;
e) Speichern mindestens eines Teils der empfangenen Dateninformationen in einem Datenspeicher (DM) gemäß der berechneten Folge von Schreibadressen, wobei der besagte Datenspeicher (DM) einen ersten Datenpuffer (DB-1) und einen zweiten Datenpuffer (DB-2) umfasst.
f) Lesen, aus dem Datenspeicher (DM), der Informationen der mehreren Mitglieder der verketteten Gruppe gemäß der im Adressspeicher (AM) gespeicherten berechneten Leseadresse,
wobei das Verfahren **dadurch gekennzeichnet ist, dass**:
i) Die besagte berechnete Folge von Leseadressen und die besagte berechnete Folge von Schreibadressen in dem besagten ersten Adresspuffer (AB-1) gespeichert werden; und
ii) wenn eine Rekonfigurationsanforderung empfangen wird, eine neue Folge von Schreibadressen und eine neue Folge von Leseadressen berechnet und in dem besagten zweiten Adresspuffer (AB-2) gespeichert werden, wobei die berechnete neue Folge von Schreibadressen zum Speichern in dem besagten ersten Datenpuffer (DB-1) und die besagte berechnete Folge von Leseadressen für das Auslesen aus dem zweiten Datenpuffer (DB-2) verwendet werden.

2. Verfahren nach Anspruch 1, weiterhin umfassend das Mapping von Dateninformationen von einem anderen Eingangsport auf mindestens ein Mitglied einer anderen verketteten Gruppe, wobei:
- Die Konfigurationsinformationen weiterhin die Zuordnung des anderen Eingangsports zu der anderen verketteten Gruppe umfassen;
- die Berechnung weiterhin die Anzahl der mindestens ein Mitglied umfassenden Mitglieder der anderen verketteten Gruppe berücksichtigt;
wobei das Verfahren die folgenden Schritte umfasst:
- Weiteres Empfangen von Dateninformationen von dem anderen Eingangsport; und
- Auslesen, aus dem Datenspeicher (DM), von Informationen der mehreren Mitglieder der verketteten Gruppe und des mindestens einen Mitglieds der anderen verketteten Gruppe gemäß der in dem Adressspeicher (AM) gespeicherten berechneten Folge von Leseadressen.

3. Verfahren nach einem beliebigen der vorstehenden Ansprüche, wobei die berechnete Folge von Schreibadressen eine arithmetische Reihe ist.

4. Verfahren nach einem beliebigen der vorstehenden Ansprüche, wobei die Informationen der mehreren Mitglieder gemäß einer aufsteigenden Reihenfolge der mehreren Mitglieder gelesen werden.

5. Verfahren nach einem beliebigen der vorstehenden Ansprüche, wobei während einer Zeitperiode das Speichern im ersten Datenpuffer (DB-1) und das Auslesen aus dem zweiten Datenpuffer (DB-2) ausgeführt werden, und wobei während einer anschließenden Zeitperiode das Auslesen aus dem ersten Datenpuffer (DB-1) und das Speichern im zweiten Datenpuffer (DB-2) ausgeführt werden.

6. Verfahren nach einem beliebigen der Ansprüche 2 bis 5, weiterhin umfassend das Speichern von Kennungen der Eingangsports im Adressspeicher (AM).

7. Verfahren nach einem beliebigen der vorstehenden Ansprüche, wobei das Lesen zu einem von dem Link Capacity Adjustment-Schema gesteuerten Zeitpunkt erfolgt.

8. Verfahren nach einem beliebigen der vorstehenden Ansprüche, wobei die empfangenen Dateninformationen in Paketen angeordnet sind.

9. Verfahren nach einem beliebigen der vorstehenden Ansprüche, wobei die Mitglieder in Rahmen eines synchronen Telekommunikationsnetzwerks angeordnet sind.

10. Verfahren nach einem beliebigen der vorstehenden Ansprüche, wobei die Verkettung der Mitglieder zusammenhängend oder virtuell ist.

11. Verfahren nach einem beliebigen der Ansprüche 8 bis 10, wobei das Paket ein Ethernet- oder Gigabit Ethernet-Paket ist.

12. Verfahren nach einem beliebigen der Ansprüche 8 bis 11, wobei das Telekommunikationsnetzwerk vom Typ synchrone digitale Hierarchie oder ein synchrones optisches Netzwerk oder ein optisches Transportnetzwerk ist.

13. Verfahren nach Anspruch 12, wobei das Mapping gemäß dem Generic Framing Procedure-Verfahren ausgeführt wird.

14. Verfahren zum Demapping von Dateninformationen, welche von mehreren Mitgliedern einer verketteten Gruppe empfangen wurden, auf einen Ausgangsport, wobei das Verfahren die folgenden Schritte umfasst:
a) Empfangen von Konfigurationsinformationen, welche eine Regel für das Zuordnen der mehreren Mitglieder der verketteten Gruppe zu dem Ausgangsport angeben;
b) Berechnen einer Folge von Schreibadressen unter Berücksichtigung der Anzahl der mehreren Mitglieder der verketteten Gruppe, und Berechnen einer Folge von Leseadressen unter Berücksichtigung der Konfigurationsinformationen und der Folge von Schreibadressen;
c) Speichern der berechneten Folge von Leseadressen in einem Adressspeicher (AM), welcher einen ersten Adresspuffer (AB-1) und einen zweiten Adresspuffer (AB-2) umfasst;
d) Empfangen der Dateninformationen von den mehreren Mitgliedern der verketteten Gruppe;
e) Speichern mindestens eines Teils der empfangenen Dateninformationen in einem Datenspeicher (DM) gemäß der berechneten Folge von Schreibadressen, wobei der besagte Datenspeicher (DM) einen ersten Datenpuffer (DB-1) und einen zweiten Datenpuffer (DB-2) umfasst;
f) Lesen, aus dem Datenspeicher (DM), der Informationen des Ausgangsports gemäß der im Adressspeicher (AM) gespeicherten berechneten Leseadresse,
wobei das Verfahren **dadurch gekennzeichnet ist, dass**:
i) Die besagte berechnete Folge von Leseadressen und die besagte berechnete Folge von Schreibadressen in dem besagten ersten Adresspuffer (AB-1) gespeichert werden; und
ii) wenn ein Rekonfigurationsbefehl empfangen wird, eine neue Folge von Schreibadressen und eine neue Folge von Leseadressen berechnet und in dem besagten zweiten Adresspuffer (AB-2) gespeichert werden, wobei die berechnete neue Folge von Schreibadressen für das Speichern im besagten ersten Datenpuffer (DB-1) und die besagte berechnete Folge von Leseadressen für das Auslesen aus dem zweiten Datenpuffer (DB-2) verwendet werden.

15. Netzwerkelement (1) zum Mapping von Dateninformationen (Ethernet) auf mehrere Mitglieder einer verketteten Gruppe (VCG(#1)), wobei des Netzwerkelement (1) umfasst:
- Mindestens einen Eingangsport (PT(#X)), welcher dazu ausgelegt ist, die Dateninformationen zu empfangen;
- einen Datenspeicher (DM), welcher dazu ausgelegt ist, mindestens einen Teil der empfangenen Dateninformationen zu speichern, wobei der besagte Datenspeicher (DM) einen ersten Puffer (DB-1) und einen zweiten Datenpuffer (DB-2) umfasst;
- einen Adressspeicher (AM), welcher einen ersten Adresspuffer (AB-1) und einen zweiten Adresspuffer (AB-2) umfasst; und
- Verarbeitungsmittel (PU), welche für die folgenden Schritte ausgelegt sind:
a) Empfangen von Konfigurationsinformationen, welche eine Regel für das Zuordnen des Eingangsports zu den mehreren Mitgliedern der verketteten Gruppe angeben;
b) Berechnen einer Folge von Schreibadressen unter Berücksichtigung der Anzahl der mehreren Mitglieder der verketteten Gruppe,
c) Berechnen einer Folge von Leseadressen unter Berücksichtigung der Konfgurationsinformationen und der Folge von Schreibadressen;
d) Speichern der berechneten Folge von Leseadressen in dem Adressspeicher (AM),
e) Speichern mindestens eines Teils der empfangenen Dateninformationen in einem Datenspeicher (DM) gemäß der berechneten Folge von Schreibadressen, wobei der besagte Datenspeicher (DM) einen ersten Datenpuffer (DB-1) und einen zweiten Datenpuffer (DB-2) umfasst.
f) Lesen, aus dem Datenspeicher (DM), der Informationen der mehreren Mitglieder der verketteten Gruppe gemäß der im Adressspeicher (AM) gespeicherten berechneten Leseadresse,
wobei das Netzwerkelement **dadurch gekennzeichnet ist, dass** es so ausgelegt ist, dass:
i) Die besagte berechnete Folge von Leseadressen und die besagte berechnete Folge von Schreibadressen in dem besagten ersten Adresspuffer (AB-1) gespeichert werden; und
ii) wenn ein Rekonfigurationsbefehl empfangen wird, eine neue Folge von Schreibadressen und eine neue Folge von Leseadressen berechnet und in dem besagten zweiten Adresspuffer (AB-2) gespeichert werden, wobei die berechnete neue Folge von Schreibadressen für das Speichern im besagten ersten Datenpuffer (DB-1) und die besagte berechnete Folge von Leseadressen für das Auslesen aus dem zweiten Datenpuffer (DB-2) verwendet werden.

16. Netzwerkelement nach Anspruch 15, wobei die Verarbeitungsmittel weiterhin für das Ausführen der folgenden Schritte ausgelegt sind:
• Während einer Zeitperiode, Speichern im ersten Datenpuffer (DB-1) und Lesen aus dem zweiten Datenpuffer (DB-2);
• während einer anschließenden Zeitperiode, Lesen aus dem ersten Datenpuffer (DB-1) und Speichern im zweiten Datenpuffer (DB-2).

17. Computerprogramm für das Mapping von Dateninformationen von einem Eingangsport auf mehrere Mitglieder einer verketteten Gruppe, wenn das Computerprogramm auf der Hardware eines Netzwerkelements ausgeführt wird, wobei das Computerprogramm Codemittel umfasst, die dazu ausgelegt sind, das Verfahren nach einem beliebigen der Ansprüche 1 bis 13 durchzuführen.

18. Ein computerlesbares Medium mit einem darauf aufgezeichneten Computerprogramm, wobei das Computerprogramm dem Anspruch 17 entspricht.

## Revendications

1. Procédé pour mapper des informations de données (Ethernet) depuis un port d'entrée (PT(#X)) jusqu'aux multiples membres d'un groupe concaténé (VCG(#1)), le procédé comprenant les étapes de :
a) recevoir des informations de configuration indiquant une règle pour assigner le port d'entrée aux multiples membres du groupe concaténé ;
b) calculer (PU) une séquence d'adresses d'écriture en prenant en compte le nombre des multiples membres du groupe concaténé et calculer une séquence d'adresses de lecture en prenant en compte les informations de configuration et la séquence d'adresses d'écriture ;
c) mémoriser la séquence d'adresses de lecture calculée dans une mémoire d'adresses (AM) comprenant une première mémoire tampon d'adresses (AB-1) et une seconde mémoire tampon d'adresses (AB-2) ;
d) recevoir les informations de données depuis le port d'entrée ;
e) mémoriser au moins une partie des informations de données reçues dans une mémoire de données (DM) selon la séquence d'adresses d'écriture calculée, ladite mémoire de données (DM) comprenant une première mémoire tampon de données (DB1-) et une seconde mémoire tampon de données (DB-2) ;
f) lire, depuis la mémoire de données (DM), des informations des multiples membres du groupe concaténé selon la séquence d'adresses de lecture calculée mémorisée dans la mémoire d'adresses (AM),
ledit procédé étant **caractérisé en ce que** :
i) ladite séquence d'adresses de lecture calculée et ladite séquence d'adresses d'écriture calculée sont mémorisées dans ladite première mémoire tampon d'adresses (AB-1) ; et
ii) quand une commande de reconfiguration est reçue, une nouvelle séquence d'adresses d'écriture et une nouvelle séquence d'adresses de lecture sont calculées et mémorisées dans ladite seconde mémoire tampon d'adresses (AB-2), ladite nouvelle séquence d'adresses d'écriture calculée étant utilisée pour mémoriser dans la première mémoire tampon de données (DB-1) et ladite séquence d'adresses de lecture calculée étant utilisée pour lire depuis la seconde mémoire tampon de données (DB-2).

2. Procédé selon la revendication 1, comprenant en outre le mappage d'information de données depuis un autre port d'entrée jusqu'à au moins un membre d'un autre groupe concaténé, dans lequel :
- les informations de configuration indiquent en outre l'assignation de l'autre port d'entrée à l'autre groupe concaténé ;
- le calcul prend en outre en compte le numéro d'au moins un membre de l'autre groupe concaténé ;
comprenant les étapes de :
- recevoir en outre des informations de données depuis l'autre port d'entrée ; et
- lire depuis la mémoire de données (DM) des informations des multiples membres du groupe concaténé et d'au moins un membre de l'autre groupe concaténé selon la séquence d'adresses de lecture calculée mémorisée dans la mémoire d'adresses (AM).

3. Procédé selon l'une quelconque des revendications précédentes, dans lequel la séquence d'adresses d'écriture calculée est une progression arithmétique.

4. Procédé selon l'une quelconque des revendications précédentes, dans lequel les informations des multiples membres sont lues selon un ordre croissant des multiples membres.

5. Procédé selon l'une quelconque des revendications précédentes, dans lequel sont réalisées pendant une période de temps la mémorisation dans la première mémoire tampon de données (DB-1) et la lecture depuis la seconde mémoire tampon de données (DB-2), et dans lequel sont réalisées pendant une période de temps ultérieure la lecture depuis la première mémoire tampon de données (DB-1) et la mémorisation dans la seconde mémoire tampon de données (DB-2).

6. Procédé selon l'une quelconque des revendications 2 à 5, comprenant en outre la mémorisation des identificateurs des ports d'entrée dans la mémoire d'adresses (AM).

7. Procédé selon l'une quelconque des revendications précédentes, dans lequel la lecture est réalisée à un moment contrôlé par le Système d'ajustement de la capacité du lien.

8. Procédé selon l'une quelconque des revendications précédentes, dans lequel les informations de données reçues sont agencées dans des paquets.

9. Procédé selon l'une quelconque des revendications précédentes, dans lequel les membres sont agencés dans des trames d'un réseau de télécommunications synchrone.

10. Procédé selon l'une quelconque des revendications précédentes, dans lequel la concaténation des membres est contiguë ou virtuelle.

11. Procédé selon l'une quelconque des revendications 8 à 10, dans lequel le paquet est Ethernet ou Gigabit Ethernet.

12. Procédé selon l'une quelconque des revendications 8 à 11, dans lequel le réseau de télécommunications est un réseau à hiérarchie numérique synchrone ou un réseau optique synchrone ou un réseau de transport optique.

13. Procédé selon la revendication 12, dans lequel le mappage est réalisé selon la procédure générique de tramage.

14. Procédé pour démapper des informations de données reçue depuis des multiples membres d'un groupe concaténé jusqu'à un port de sortie, le procédé comprenant les étapes de :
a) recevoir des informations de configuration indiquant une règle pour assigner les multiples membres du groupe concaténé au port de sortie ;
b) calculer une séquence d'adresses d'écriture en prenant en compte le nombre des multiples membres du groupe concaténé et calculer une séquence d'adresses de lecture en prenant en compte les informations de configuration et la séquence d'adresses d'écriture ;
c) mémoriser la séquence d'adresses de lecture calculée dans une mémoire d'adresses (AM) comprenant une première mémoire tampon d'adresses (AB-1) et une seconde mémoire tampon d'adresses (AB-2) ;
d) recevoir les informations de données des multiples membres du groupe concaténé ;
e) mémoriser au moins une partie des informations de données reçues dans une mémoire de données (DM) selon la séquence d'adresses d'écriture calculée, ladite mémoire de données (DM) comprenant une première mémoire tampon de données (DB-1) et une seconde mémoire tampon de données (DB-2) ;
f) lire depuis la mémoire de données (DM) des informations du port de sortie selon la séquence d'adresses de lecture calculée mémorisée dans la mémoire d'adresses (AM),
ledit procédé étant **caractérisé en ce que** :
i) ladite séquence d'adresses de lecture calculée et ladite séquence d'adresses d'écriture calculée sont mémorisées dans ladite première mémoire tampon d'adresses (AB-1) ; et
ii) quand une commande de reconfiguration est reçue, une nouvelle séquence d'adresses d'écriture et une nouvelle séquence d'adresses de lecture sont calculées et mémorisées dans ladite seconde mémoire tampon d'adresses (AB-2), ladite nouvelle séquence d'adresses d'écriture calculée étant utilisée pour mémoriser dans la première mémoire tampon de données (DB-1) et ladite séquence d'adresses de lecture calculée étant utilisée pour lire depuis la seconde mémoire tampon de données (D8-2).

15. Élément de réseau (1) pour mapper des informations de données (Ethernet) jusqu'aux multiples membres d'un groupe concaténé (VCG(#1)), l'élément de réseau (1) comprenant :
- au moins un port d'entrée (PT(#X)) adapté pour recevoir les informations de données ;
- une mémoire de données (DM) adaptée pour mémoriser au moins une partie des informations de données reçues, ladite mémoire de données (DM) comprenant une première mémoire tampon de données (DB-1) et une seconde mémoire tampon de données (DB-2) ;
- une mémoire d'adresses (AM) comprenant une première mémoire tampon d'adresses (AB-1) et une seconde mémoire tampon d'adresses (AB-2) ; et
- des moyens de traitement (PU) adaptés pour :
a) recevoir des informations de configuration indiquant une règle pour assigner le port d'entrée aux multiples membres du groupe concaténé ;
b) calculer une séquence d'adresses d'écriture en prenant en compte le nombre des multiples membres du groupe concaténé ;
c) calculer une séquence d'adresses de lecture en prenant en compte les informations de configuration et la séquence d'adresses d'écriture ;
d) mémoriser la séquence d'adresses de lecture calculée dans la mémoire d'adresses (AM) ;
e) mémoriser dans la mémoire de données (DM) au moins la partie des informations de données reçues selon la séquence d'adresses d'écriture calculée ;
f) lire, depuis la mémoire de données (DM), des informations des multiples membres du groupe concaténé selon la séquence d'adresses de lecture calculée mémorisée dans la mémoire d'adresses (AM),
ledit élément de réseau étant **caractérisé en ce qu'**il est tel que :
i) ladite séquence d'adresses de lecture calculée et ladite séquence d'adresses d'écriture calculée sont mémorisées dans ladite première mémoire tampon d'adresses (AB-1) ; et
ii) quand une commande de reconfiguration est reçue, une nouvelle séquence d'adresses d'écriture et une nouvelle séquence d'adresses de lecture sont calculées et mémorisées dans ladite seconde mémoire tampon d'adresses (AB-2), ladite nouvelle séquence d'adresses d'écriture calculée étant utilisée pour mémoriser dans la première mémoire tampon de données (DB-1) et ladite séquence d'adresses de lecture calculée étant utilisée pour lire depuis la seconde mémoire tampon de données (DB-2).

16. Élément de réseau selon la revendication 15, dans lequel les moyens de traitement sont en outre adaptés pour :
• réaliser pendant une période de temps la mémorisation dans la première mémoire tampon de données (DB-1) et la lecture depuis la seconde mémoire tampon de données (DB-2) ;
• réaliser pendant une période de temps ultérieure la lecture depuis la première mémoire tampon de données (DB-1) et la mémorisation dans la seconde mémoire tampon de données (DB-2).

17. Programme informatique pour mapper des informations de données depuis un port d'entrée jusqu'aux multiples membres d'un groupe concaténé quand le programme informatique est exécuté sur le matériel d'un élément de réseau, le programme informatique comprenant des moyens de codage adaptés pour réaliser le procédé selon l'une quelconque des revendications 1 à 13.

18. Support lisible par ordinateur sur lequel un programme informatique est enregistré, dans lequel le programme informatique est selon la revendication 17.
